**Europäisches Patentamt**

**European Patent Office**

**Office européen des brevets**

(19)

(11) Veröffentlichungsnummer: **0 190 716**
**B1**

(12) **EUROPÄISCHE PATENTSCHRIFT**

(45) Veröffentlichungstag der Patentschrift:
23.08.89

(51) Int. Cl.⁴: **B 62 D 33/06**

(21) Anmeldenummer: **86101415.7**

(22) Anmeldetag: **04.02.86**

(54) **Herd-Spüle-Kombination in einem Lastkraftwagen-Fahrerhaus.**

(30) Priorität: 06.02.85 DE 3503967

(43) Veröffentlichungstag der Anmeldung:
13.08.86 Patentblatt 86/33

(45) Bekanntmachung des Hinweises auf die Patenterteilung:
23.08.89 Patentblatt 89/34

(84) Benannte Vertragsstaaten:
DE FR GB IT SE

(56) Entgegenhaltungen:
DE-A-1 930 280
DE-A-2 617 941
US-A-4 082 391

(73) Patentinhaber: **Iveco Magirus Aktiengesellschaft,
Schillerstrasse 2 Postfach 27 40, D-7900
Ulm/Donau (DE)**

(72) Erfinder: **Kraus, Ulrich, Lichtensteinstrasse 3,
D-7900 Ulm (DE)**
Erfinder: **Egle, Elmar, Ing.- grad., Sebastian-
Fischer- Weg 32, D-7900 Ulm (DE)**

(74) Vertreter: **Socha, Peter, Iveco Magirus AG
Postfach 2740 Schillerstrasse 2, D-7900 Ulm (DE)**

**Beschreibung**

Die Erfindung betrifft eine Herd-Spüle-Kombination von der Gattung gemäß dem Oberbegriff des Anspruchs 1.

Aus DE-A1-2 617 941 ist eine feststehende abdeckbare Herd-Spüle-Kombination der vorgenannten Art bekannt, die zwischen Fahrer- und Beifahrersitz im Fahrerhaus angeordnet ist. Sie weist einen Klappdeckel auf, der nach vorne zwecks Öffnen der Herd-Spüle-Kombination und zur Schaffung einer horizontalen Arbeitsfläche geschwenkt werden kann. Von Nachteil ist der relativ große feststehende Raumbedarf für die Herd-Spüle-Kombination im vorderen Nutzraum des Fahrerhauses. Auch ist die Handhabung des schwenkbaren Klappdeckels ergonomisch ungünstig. Durch die festehende Herd-Spüle-Kombination ist der Durchstieg in den hinteren Fahrerhausraum stark erschwert.

Aus US-A-4 082 391 ist eine Herd-Spüle-Kombination gemäß dem Oberbegriff des Anspruchs 1 grundsätzlich bekannt, wobei es sich jedoch bei dem Fahrzeug insbesondere um ein Boot handelt. Bei der bekannten Anordnung befinden sich Herd und Spüle als Kombination in einem kastenartigen Element, welches mittels ersten Scharnieren an einem im Querschnitt L-förmigen Element schwenkbar angeordnet ist, das seinerseits unter Zwischenschaltung eines weiteren im Querschnitt U-förmigen Elements an der Bootwand befestigt ist. Von seiner vertikalen Nichtgebrauchsstellung in seine Gebrauchsstellung muß das kastenartige Element in Horizontallage geschwenkt werden, wobei zu dessen Vertikalabstützung eine mittels eines zweiten Scharniers an ihm befestigte zusätzliche Abstützplatte in Vertikalstellung geklappt werden muß. Zum Öffnen der Herd-Spüle-Kombination zwecks Gebrauchs muß ein mittels eines dritten Scharniers an einer oberen seitlichen Kante des kastenartigen Elements angelenkter Deckel aufgeschwenkt werden. Damit dieser Deckel danach als Ablageplatte dienen kann, ist er durch ein zum dritten Scharnier parallel verlaufendes viertes Scharnier in zwei etwa gleich große Hälften unterteilt, von denen lediglich die dem kastenartigen Element benachbarte Hälfte als Ablage dient und die andere Hälfte nach Herabschwenken in eine schräg zur unteren seitlichen Kante des kastenartigen Elements verlaufende und dort abgestützte Stellung zur Vertikalabstützung der Ablage-Hälfte dient.

Die bekannte Anordnung ist in konstruktiver Hinsicht besonders aufwendig und teuer und in bedienungsmäßiger (ergonomischer) Hinsicht relativ kompliziert und unzweckmäßig. Im übrigen ist sie insgesamt sperrig und hat somit in Nichtgebrauchsstellung, beim Umwandeln in die Gebrauchsstellung sowie auch in dieser selbst einen relativ großen Raumbedarf. Diese bekannte Anordnung ist damit insbesondere zur Verwendung in einem Lastkraftwagen-Fahrerhaus nicht geeignet.

Aufgabe der vorliegenden Erfindung ist die Schaffung einer Herd-Spüle-Kombination der eingangs genannten Gattung, die einfach und kompakt aufgebaut und praktisch zu handhaben ist und insbesondere auch in einem Lastkraftwagen-Fahrerhaus verwendbar ist.

Diese Aufgabe wird bei einer Herd-Spüle-Kombination gemäß dem Oberbegriff des Anspruchs 1 erfindungsgemäß durch dessen Kennzeichen- Merkmale gelöst.

Durch die Erfindung wird mit Hilfe einfacher Mittel eine besonders einfache, raumsparende und ergonomisch günstige Herd-Spüle-Kombination für ein Lastkraftwagen-Fahrerhaus geschaffen, die grundsätzlich nicht störend im hinteren Fahrerhausraum, beispielsweise unter einer Querliege, angeordnet ist. Nimmt die Herd-Spüle-Kombination ihre Nichtgebrauchslage ein, so ist freier Durchstieg in den hinteren Fahrerhausraum möglich, was ergonomisch vorteilhaft ist. Gleichwohl ist sie in ihrer Gebrauchslage sowohl vom Fahrer als auch vom Beifahrer leicht zugänglich. Dabei weist das Schubladen-Element einen Horizontaldeckel auf, der seinerseits bezüglich des Schubladenelements in Fahrzeuglängsrichtung verschieblich ist, und zwar entweder in Fahrtrichtung nach vorne und/oder in Fahrtrichtung nach hinten. Letztgenannte Alternative schafft die Möglichkeit einer frei zugänglichen Herd-Spüle-Kombination im herausgezogenen Zustand, während der Horizontaldeckel praktisch in seiner (versteckten) Nichtgebrauchsstellung verbleibt.

Eine leichtgewichtige robuste Weiterbildung der Erfindung zeichnet sich durch untere Stützrollen oder Stützklapparme am zumindest teilweise in den Raum zwischen Fahrer- und Beifahrersitz schiebbaren Schubladen-Element aus, die zur Abstützung auf dem feststehenden Tunnelboden oder auf einer Fahrerhaus-Ablage dienen. Dadurch werden im herausgezogenen Zustand die Gleit-oder Rollenführungen entlastet, insbesondere auch dann, wenn, wie in einer weiteren vorteilhaften Weiterbildung der Erfindung vorgesehen, der Horizontaldeckel in seinem nach vorne herausgezogenen Zustand bei aus dem hinteren Fahrerhausraum herausgezogenen Schubladen-Element an seiner Vorderkante durch die vordere Fahrerhausbrüstung gestützt ist.

Bevorzugt ist das fahrerhausbewegliche Element im Raum unterhalb einer hinteren Fahrerhausliege untergebracht und mithin bei Nichtgebrauch praktisch überhaupt nicht störend.

Schließlich ist noch eine zusätzliche zweckmäßige Weiterbildung der Erfindung durch die Merkmale des Anspruchs 6 gekennzeichnet.

Aus DE-A-1 930 280 ist es zwar grundsätzlich bekannt, bei einem Motorwohnwagen ein Waschbecken, wenn es nicht in Gebrauch ist, unter einem Fahrzeug-Rücksitz zu verstauen. Mangels Angabe weiterer Einzelheiten hierzu in dieser Literaturstelle ist anzunehmen, daß das Waschbecken dabei einfach unter den Rücksitz gelegt und zum Gebrauch von dort herausgeholt und an einen zum Waschen geeigneten Platz im Motorwohnwagen oder außerhalb dieses gelegt wird. Dieser Literaturstelle ist somit kein Hinweis auf die spezifische Lehre gemäß der vorliegenden Erfindung entnehmbar.

Die Erfindung wird nachfolgend anhand eines Ausführungsbeispiels unter Bezugnahme auf die beigefügte Zeichnung näher erläutert; es zeigen

Fig. 1 in perspektivischer schematischer Ansicht eine Herd-Spüle-Kombination in ihrer Nichtgebrauchsstellung,

Fig. 2 die Herd-Spüle-Kombination nach Fig. 1 mit herausgezogenem Horizontaldeckel, und

Fig. 3 die Herd-Spüle-Kombination nach den Figuren 1 und 2 in ihrer Gebrauchsstellung.

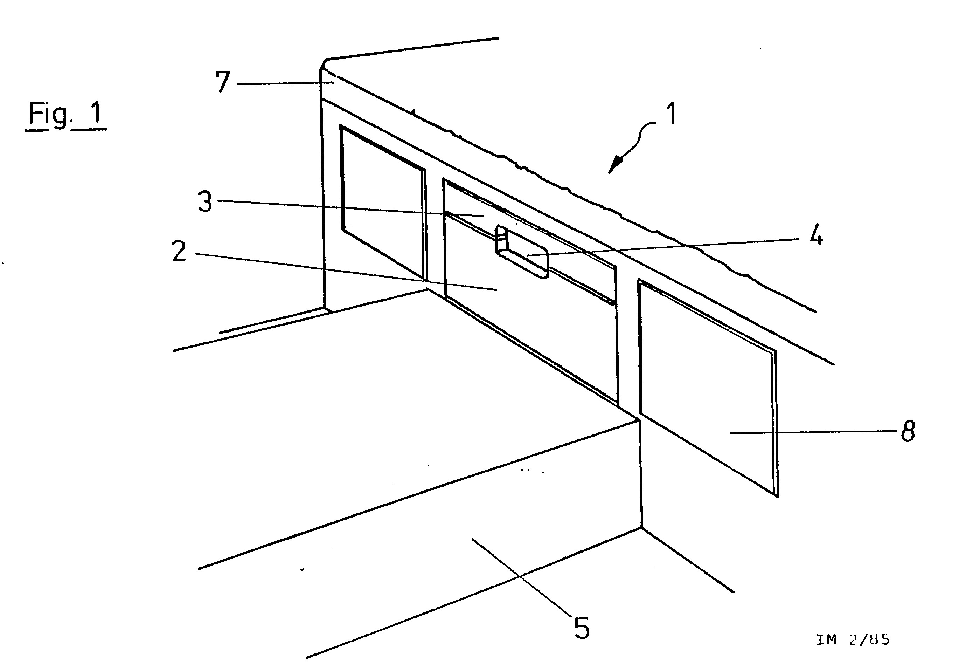

Gemäß Zeichnung ist eine Herd-Spüle-Kombination 1 in einem Lastkraftwagen-Fahrerhaus an hinterer Stelle untergebracht, und zwar gemäß Fig. 1 unter einer Querliege hinter dem Fahrer und dem Beifahrersitz an zentraler Stelle über dem Fahrerhaustunnel 5. Bei Bedarf kann sie in Fahrrichtung herausbewegt, insbesondere herausgezogen oder -geklappt werden.

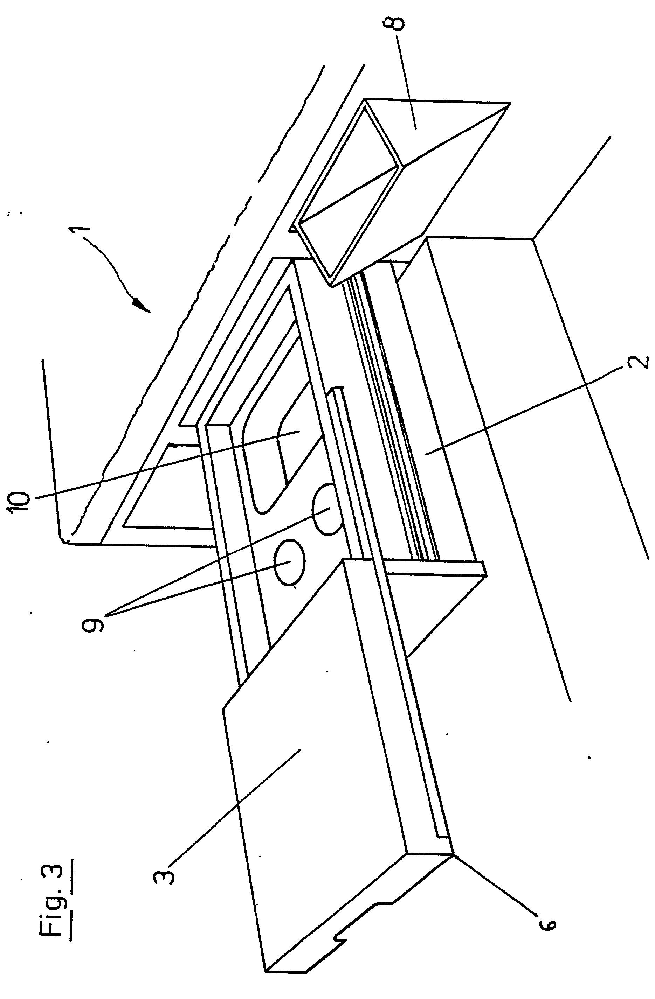

Die Herd-Spüle-Kombination 1 umfaßt im besonderen ein Schubladenelement 2 mit einem in Fahrzeuglängsrichtung verschieblichen Horizontaldeckel 3, der mittels des Griffes 4 betätigt werden kann. Im Schubladen-Element 2 befinden sich an vorderer Stelle zwei Heizplatten 9 und an hinterer Stelle eine Spüle 10, wie dies insbesondere der Fig. 3 zu entnehmen ist.

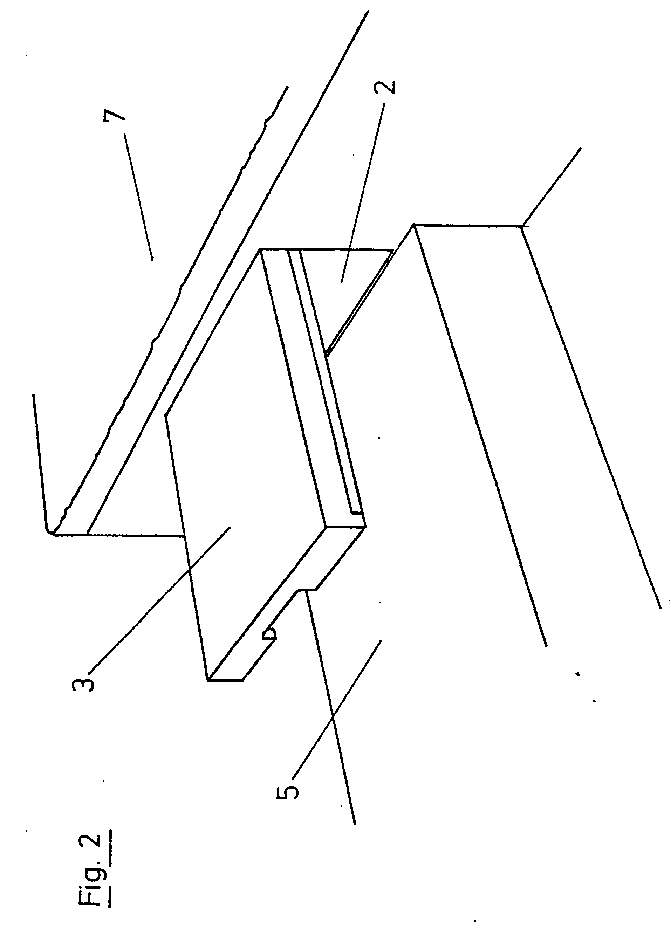

Ersichtlich kann mithin ausschließlich der Horizontaldeckel mittels der Schiebeführung aus dem hinteren Fahrerhausraum unterhalb der vorhandenen Querliege in Fahrrichtung nach vorne gezogen werden (vgl. Fig. 2). In dieser Lage dient der Horizontaldeckel 3 als übliche Tischablage.

Sollen Herd und/oder Spüle in eine Gebrauchslage gebracht werden, so wird die Herd-Spüle-Kombination 1 in die in Fig. 3 veranschaulichte Stellung gebracht. In dieser Anordnung dient der Horizontaldeckel 3 dann vornehmlich als Eßtisch. Die vordere untere Kante 6 des Horizontaldeckels 3 kann mit der vorderen Fahrerhausbrüstung in einem Stützeingriff stehen. Auch können untere Stützrollen oder ausklappbare Stützarme am Schubladen-Element 2 vorgesehen sein, die auf dem Fahrerhaustunnel 5 aufliegen.

Das Schubladen-Element kann ferner untere oder seitliche Ablagen oder ausklappbare Behältnisse aufweisen. Zweckmäßigerweise umfaßt die Herd-Spüle-Kombination 1 seitlich mindestens ein weiteres aufklappbares Behältnis 8 für Nahrungsmittel oder dergleichen.

## Patentansprüche

1. Herd-Spüle-Kombination (1) in einem Fahrzeug, welche in einem gegenüber dem Fahrzeug von einer Nichtgebrauchsstellung in eine Gebrauchsstellung beweglichen Element angeordnet ist, dadurch gekennzeichnet, das die Herd-Spüle-Kombination in einem Lastkraftwagen-Fahrerhaus mit Fahrer- und Beifahrersitz, angeordnet ist und daß das bewegliche Element ein Schubladen-Element (2) ist, welches mittels einer horizontalen Schiebe- oder Rollenführung aus dem hinteren Fahrerhausraum in Fahrtrichtung in die Gebrauchsstellung schiebbar ist und einen Horizontaldeckel (3) aufweist, der seinerseits bezüglich des Schubladen-Elements (2) in Fahrzeuglängsrichtung verschieblich ist.

2. Herd-Spüle-Kombination (1) nach Anspruch 1, dadurch gekennzeichnet, daß das Schubladen-Element zumindest teilweise in den Raum zwischen Fahrer- und Beifahrersitz schiebbar ist.

3. Herd-Spüle-Kombination (1) nach Anspruch 1 oder 2, dadurch gekennzeichnet, daß das Schubladen-Element (2) vorne unten Stützrollen oder Stützklapparme zur Abstützung auf dem Fahrerhaustunnel (5) oder auf einer Fahrerhaus-Ablage aufweist.

4. Herd-Spüle-Kombination (1) nach Anspruch 2 oder 3, dadurch gekennzeichnet, daß der Horizontaldeckel (3) in seinem nach vorne herausgezogenen Zustand bei aus dem hinteren Fahrerhausraum herausgezogenem Schubladen-Element (2) an seiner Vorderkante (6) durch die vordere Fahrerhausbrüstung abgestützt ist.

5. Herd-Spüle-Kombination (1) nach einem der Ansprüche 1 bis 4, dadurch gekennzeichnet, daß das Schubladen-Element (2) im Raum unterhalb einer hinteren Fahrerhausliege (7) untergebracht ist.

6. Herd-Spüle-Kombination (1) nach einem der Ansprüche 1 bis 5, dadurch gekennzeichnet, daß seitlich des Schubladen-Elements (2) zumindest ein ausklappbares Behältnis (8) vorgesehen ist.

## Claims

1. A stove-and-sink combination (1) in a vehicle, the combination being disposed in a component which is movable with respect to the vehicle from an inoperative to an operative position, characterised in that the stove-and-sink combination is disposed in the driver's cab of a lorry comprising a driver's seat and a passenger's seat, and that the movable component is a drawer component (2) which is movable on a horizontal sliding or roller guide into the operative position in the direction of travel from the rear of the driver's cab and has a horizontal cover (3) which, in turn, is movable in the longitudinal direction of the vehicle with respect to the drawer component (2).

2. A stove-and-sink combination (1) according to claim 1, characterised in that the drawer component is at least partly slidable into the space between the driver's seat and the passenger's seat.

3. A stove-and-sink combination (1) according to claim 1 or 2, characterised in that the drawer component (2) has supporting rollers or supporting hinged arms at its lower front portion for resting on the ridge (5) or on a shelf of the driver's cab.

4. A stove-and-sink combination (1) according to claim 2 or 3, characterised in that, when the horizontal cover (3) is pulled out frontwards and the drawer component (2) has been pulled out of the rear of the cab, the front edge (6) of the cover is supported by the front railing on the cab.

5. A stove-and-sink combination (1) according to any one of claims 1 to 4, characterised in that the drawer component (2) is disposed in the space underneath a sleeping berth (7) at the rear of the cab.

6. A stove-and-sink combination (1) according to any one of claims 1 to 5, characterised in that at least one swing-out container (8) is provided at the side of the drawer component (2).

**Revendications**

1. Ensemble combiné cuisinière-évier (1) pour un véhicule placé dans un élément mobile par rapport au véhicule entre une position de non utilisation et une position d'utilisation, ensemble caractérisé en ce qu'il est prévu dans une cabine de camion équipée d'un siège de conducteur et d'un siège de passager et l'élément mobile est un élément en forme de tiroir (2) qui peut être tiré par un moyen de guidage horizontal à coulisseaux ou à galets, de la partie arrière de la cabine du camion, dans la direction de déplacement jusque dans la position d'utilisation et comporte un couvercle horizontal ((3) qui est lui-même coulissant par rapport à élément en forme de tiroir (2), dans la direction longitudinale du véhicule.

2. Ensemble combiné cuisinière-évier (1) selon la revendication 1, caractérisé en ce que l'élément en forme de tiroir peut coulisser partiellement dans l'intervalle compris entre le siège du passager et le siège du conducteur.

3. Ensemble combiné cuisinière-évier (1) selon la revendication 1 ou 2, caractérisé en ce que l'élément en forme de tiroir (2) comporte à l'avant, et en partie inférieure, des galets d'appui ou des bras d'appui rabattables pour s'appuyer sur le tunnel (5) de la cabine ou sur un appui à l'intérieur de la cabine.

4. Ensemble combiné cuisinière-évier (1) selon la revendication 2 ou 3, caractérisé en ce que le couvercle horizontal (3) s'appuie dans sa position tirée vers l'avant, lorsque l'élément en forme de tiroir (2) est tiré de la partie arrière de la cabine, par son arête avant (6) sur l'avant du tableau de bord de la cabine.

5. Ensemble combiné cuisinière-évier (1) selon l'une des revendications 1 à 4, caractérisé en ce que l'élément en forme de tiroir (2) est logé dans le volume en-dessous du lit arrière (7) dans la cabine.

6. Ensemble combiné cuisinière-évier (1) selon l'une des revendications 1 à 5, caractérisé en ce qu'à côté de l'élément en forme de tiroir (2) il est prévu au moins un réceptacle (8) qui peut se dégager par basculement.

Fig. 1

IM 2/85

Fig. 2

EP 0 190 716 B1

IM 2/85

Fig. 3

EP 0 190 716 B1

IM 2/85